# EUROPEAN PATENT APPLICATION

(11) **EP 4 625 531 A1**
(43) Date of publication of application: **01.10.2025**
(21) Application number: 25163341.8
(22) Date of filing: 12.03.2025
(51) Int. Cl.: H01M 4/24, H01M 4/66, H01M 10/04, H01M 10/36, H01M 12/08, H01M 4/02

(54) **BIPOLAR CURRENT COLLECTOR FOR ZINC BROMINE STATIC BATTERY APPARATUS AND METHOD OF PREPARATION THEREOF**

(30) Priority: 13.03.2024 IN 202411018073
(71) Applicant: Offgrid Energy Labs Inc., San Francisco California 94111 (US)
(72) Inventor: Tulachan, Brindan, 208016 Kanpur (IN)
(74) Representative: Nirwan, Prajwal

(57) **Abstract**

A bipolar current collector of a Zinc Bromine Static Battery (ZBSB) apparatus comprises a first electrically conductive layer comprising a polyethylene based polymer and an electrically conductive agent. The first electrically conductive layer is in contact with a cathode layer of the ZBSB apparatus. The bipolar current collector further comprises a second electrically conductive layer that is attached to the first electrically conductive layer. The second electrically conductive layer comprises the polyethylene based polymer and a graphite layer. The ZBSB apparatus is independent of a preinstalled anode electrode. The second electrically conductive layer is configured to dynamically operate as an anode layer of the ZBSB apparatus when in operation.

## Description

### TECHNICAL FIELD

The present disclosure relates generally to battery technology and more specifically, to a Zinc Bromine Static Battery (ZBSB) apparatus, a bipolar current collector for the ZBSB apparatus and a method of preparation of the bipolar current collector for the ZBSB apparatus.

### BACKGROUND

Typically, a battery apparatus includes a current collector that acts as a conductive pathway for a flow of electrons between electrochemical reactions occurring in an electrode of the battery apparatus and an external circuit. The current collector facilitates a transfer of electrical charges generated during chemical reactions within the battery apparatus. The current collector is generally manufactured from materials exhibiting high electrical conductivity, resistance to corrosion induced by an electrolyte of the battery apparatus, and resilience against the electrochemical reactions (i.e. redox reactions) to avoid rapid consumption. In such cases, the battery apparatus may be a zinc-bromine battery (ZBB) apparatus due to their potential long life, deep discharge characteristics and potential low manufacturing cost.

Conventionally, the current collectors of the ZBB apparatus are composed of metallic materials such as copper or aluminium and form a critical interface between the electrodes of the ZBSB apparatus and the external electrical circuit. However, one of the technical challenges with the conventional current collector of the zinc-bromine batteries is corrosion during charging and discharging (i.e., specifically charge and discharging redox couple (Br⁻/Br₂) at the cathode) leading to reduction in coulomb efficiency over a period of time. Further, for conventional zinc-based batteries (e.g., conventional zinc-bromine static batteries), it is observed that the conventional cathode current collector generally corrodes due to oxidation followed by formation of a passivation layer on it, resulting in decrease of ionic conduction and increase of electrical resistance to the flow of electrons and further reduces the operational life of the ZBB apparatus. Typically, the passivation layer is a thin, protective oxide layer formed typically on metals' surface due to oxygen when metals come into contact with oxygen. Furthermore, widespread use of metallic current collectors of the ZBB apparatus is hindered by inherent limitations challenges such as dendrite formation, mechanical stress, and limited conductivity.

Therefore, in light of the foregoing discussion, there exists a need to overcome the aforementioned drawbacks associated with the conventional current collectors and the method of preparation of the same.

### SUMMARY

The present disclosure provides a bipolar current collector for a Zinc Bromine Static Battery (ZBSB) apparatus and a method of preparation of the bipolar current collector for the ZBSB apparatus. The present disclosure addresses the technical problem of how to efficiently manage corrosive reactions and degradation in current collectors, especially in the context of static zinc-bromine batteries. An aim of the present disclosure is to provide a solution that overcomes at least partially the problems encountered in the prior art and provides the bipolar current collector for the ZBSB apparatus that effectively resists corrosion and degradation.

By incorporating a unique combination of a polyethylene-based polymer, conductive agents, and a graphite layer, the disclosed bipolar current collector ensures enhanced chemical stability and durability during cycling. Furthermore, the aim of the present disclosure is to provide an improved ZBSB apparatus that benefits from the enhanced performance of the disclosed bipolar current collector. The collector, configured to dynamically operate as an anode layer, not only addresses the challenges associated with traditional metallic current collectors but also offers a cost-effective alternative, contributing to the overall efficiency and economic viability of the ZBSB apparatus.

One or more objectives of the present disclosure are achieved by the solutions provided in the enclosed independent claims. Advantageous implementations of the present disclosure are further defined in the dependent claims.

In one aspect, the present disclosure provides a bipolar current collector of a Zinc Bromine Static Battery (ZBSB) apparatus. The bipolar current collector comprises a first electrically conductive layer comprising a polyethylene based polymer and an electrically conductive agent. The first electrically conductive layer is in contact with a cathode layer of the ZBSB apparatus. The bipolar current collector further comprises a second electrically conductive layer that is attached to the first electrically conductive layer. The second electrically conductive layer comprises the polyethylene based polymer and a graphite layer. The ZBSB apparatus is independent of a preinstalled anode electrode. The second electrically conductive layer is configured to dynamically operate as an anode layer of the ZBSB apparatus when in operation.

The disclosed bipolar current collector ensures heightened resistance to corrosive environments, prolonging the operational life of the ZBSB apparatus. Moreover, the dynamic operation of the second electrically conductive layer as an anode adds a layer of adaptability, significantly enhancing the efficiency and overall performance of the ZBSB apparatus. The inclusion of graphite contributes to improved conductivity, surface functionality, and mitigating dendrite growth and ensuring reliable cycling performance. Graphite's outstanding electrical conductivity plays a pivotal role, fostering efficient electron flow within the collector and reducing electrical resistance during charge and discharge cycles. This heightened conductivity not only facilitates optimal energy transfer but also diminishes losses, ensuring the collector operates at peak efficiency. Additionally, the unique surface properties of graphite, characterized by high chemical inertness, shield the collector from corrosive environments, extending its operational life. The unique morphology of graphite surface helps in creating a more uniform and accessible surface area for electrochemical reactions. Crucially, graphite's structure mitigates dendrite growth, providing more stable surface that enhances the safety and reliability of the Zinc Bromine Static Battery (ZBSB) apparatus. Moreover, the independence from a preinstalled anode electrode not only streamlines the design and manufacturing process but also offers a versatile and cost-effective solution. In essence, the above mentioned aspect embodies a technical leap forward, providing a resilient, adaptable, and efficient bipolar current collector for the ZBSB apparatus.

In an implementation, the polyethylene based polymer of the first electrically conductive layer comprises high-density polyethylene (HDPE) having a density of 0.93-0.97 gram per cubic centimetre. In such implementation, optimal mechanical strength is provided while maintaining necessary flexibility for the bipolar current collector. The specified density range ensures resistance to chemical degradation in the highly corrosive bromine/bromide environment while providing sufficient crystallinity for structural integrity. The high molecular weight and density of the HDPE creates a stable platform for the conductive agents, preventing migration or displacement during battery cycling.

In another implementation, the first electrically conductive layer comprises 60-90% by weight of the polyethylene based polymer, 10-30% by weight of the electrically conductive agent, and 1-5% by weight of a plasticizer. In such implementation, an optimal balance is established between mechanical integrity (provided by the polymer matrix) and electrical conductivity (provided by the conductive agent). The 10-30% weight range of electrically conductive agent ensures sufficient electron pathways while avoiding excessive material use which would compromise mechanical properties. The 1-5% plasticizer content enhances processability during manufacturing while improving flexibility and reducing brittleness of the final component.

In yet another implementation, the second electrically conductive layer comprises 25-50% by weight of the polyethylene based polymer, 60-80% by weight of graphite, and 1-5% by weight of a plasticizer. In such implementation, the higher graphite content (60-80%) in the second layer creates an optimal surface for zinc plating and stripping processes, significantly reducing dendrite formation. The composition ratio ensures superior electrical conductivity in the layer operating as the dynamic anode, minimizing internal resistance and improving overall battery efficiency. The specified proportions create a microporous structure with uniform surface morphology that promotes even zinc deposition and reduces localized current densities.

In another implementation, the electrically conductive agent comprises at least one of carbon nanotubes and electrically conductive carbon. In such implementation, exceptional electrical conductivity is provided with minimal loading, creating efficient electron pathways throughout the polymer matrix. The carbon nanotubes and electrically conductive carbon are chemically inert toward bromine/bromide environments, preventing degradation and maintaining performance over extended cycling. The nanoscale nature of carbon nanotubes and electrically conductive carbon enables the formation of an interconnected conductive network at lower weight percentages compared to conventional conductive fillers.

In second aspect, the present disclosure provides a Zinc Bromine Static Battery (ZBSB) apparatus. The ZBSB apparatus comprises a first cell that comprises a first cathode layer, a second cell that comprises a second cathode layer, and a bipolar current collector disposed between the first cell and the second cell. The bipolar current collector comprises a first electrically conductive layer comprising a polyethylene based polymer and an electrically conductive agent, wherein the first electrically conductive layer is in contact with the first cathode layer of the first cell. The bipolar current collector further comprises a second electrically conductive layer that is attached to the first electrically conductive layer. The second electrically conductive layer comprises the polyethylene based polymer and a graphite layer. Each of the first cell and the second cell of the ZBSB apparatus is independent of a preinstalled anode electrode. The second electrically conductive layer is configured to dynamically operate as an anode layer of the second cell when in operation.

The second aspect of the present disclosure achieves all the advantages and technical effects of the bipolar current collector of the ZBSB apparatus of the present disclosure.

In an implementation, the ZBSB apparatus further comprises a separator layer disposed between the second electrically conductive layer and the second cathode layer. In such implementation, the separator layer physically prevents direct contact between the cathode and the dynamically operating anode layer, eliminating the risk of internal short circuits. The separator configuration enables controlled ion transport while maintaining electrical isolation, optimizing the electrochemical reactions within each cell. The separator layer helps distribute electrolyte evenly throughout the cell, enhancing reaction kinetics and improving efficiency.

In another implementation, the separator layer comprises at least one of an absorption glass mat (AGM), polyethylene (PE), and a sulfonated tetrafluoroethylene based fluoropolymer-copolymer. In such implementation, excellent electrolyte retention and distribution is provided while offering superior mechanical stability in the corrosive environment. The polyethylene separators deliver optimal balance between porosity and mechanical strength, enhancing ion transport while maintaining structural integrity. The sulfonated tetrafluoroethylene based fluoropolymer-copolymer offers exceptional chemical resistance to bromine/bromide species, preventing degradation and extending battery lifespan.

In yet another implementation, the ZBSB apparatus further comprises an electrolyte filling slot configured to facilitate introduction of an electrolyte into the ZBSB apparatus. In such implementation, precise and controlled electrolyte introduction is enabled without disturbing the internal cell structure. The filling slot prevents cross-contamination between cells, maintaining the electrochemical integrity of individual cells within the ZBSB apparatus. The electrolyte filling slot allows for post-assembly electrolyte addition, simplifying manufacturing processes and improving production efficiency.

In another implementation, the ZBSB apparatus further comprises a third cell comprising a third cathode layer and a second bipolar current collector disposed between the second cell and the third cell. In such implementation, the energy density per unit volume is significantly increased compared to single-cell designs. The multi-cell architecture reduces the number of external electrical connections, minimizing contact resistance and improving overall system efficiency. The bipolar arrangement allows for more efficient thermal management across the battery stack, enhancing safety and performance.

In third aspect, the present disclosure provides a method of preparation of a bipolar current collector for a Zinc Bromine Static Battery (ZBSB) apparatus. The method includes adding an electrically conductive agent on a substrate made of a polyethylene based polymer to form a first electrically conductive layer, adding graphite on a substrate made of a polyethylene based polymer to form a second electrically conductive layer, and joining the formed first electrically conductive layer with the formed second electrically conductive layer to form the bipolar current collector for the ZBSB apparatus.

The method of preparation of the bipolar current collector for the ZBSB apparatus of the present disclosure ensures a streamlined and effective manufacturing process. By carefully adding electrically conductive agents and graphite layers to the respective substrates, and subsequently joining them, the method results in a robust and reliable bipolar current collector for the ZBSB apparatus.

In an implementation, the joining comprises disposing the formed first electrically conductive layer over the formed second electrically conductive layer and applying a hot rolling operation at a temperature ranging from 100-150 degree Celsius. In such implementation, optimal polymer flow and interlayer adhesion is ensured without degrading the conductive agents or causing polymer decomposition. The hot rolling process creates a uniform and controlled bonding zone between the layers, eliminating delamination risks during battery operation. The manufacturing approach creates seamless electrical pathways between the two functionally distinct layers, minimizing interfacial resistance.

It has to be noted that all devices, elements, circuitry, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof. It will be appreciated that features of the present disclosure are susceptible to being combined in various combinations without departing from the scope of the present disclosure as defined by the appended claims.

Additional aspects, advantages, features and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1A is a diagram illustrating an exploded view of a cell of a zinc bromine static battery (ZBSB) apparatus, in accordance with an embodiment of the present disclosure;
FIG. 1B is a diagram illustrating a cross-sectional view of the ZBSB apparatus, in accordance with an embodiment of the present disclosure;
FIG. 1C is a diagram illustrating a top view of the ZBSB apparatus, in accordance with an embodiment of the present disclosure;
FIG. 2 is a diagram illustrating a process of preparation of a bipolar current collector for the ZBSB apparatus, in accordance with an embodiment of the present disclosure;
FIG. 3 is a diagram illustrating a cross sectional view of a cell of a ZBSB apparatus, in accordance with another embodiment of the present disclosure; and
FIG. 4 is a flowchart of a method of preparation of the bipolar current collector, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

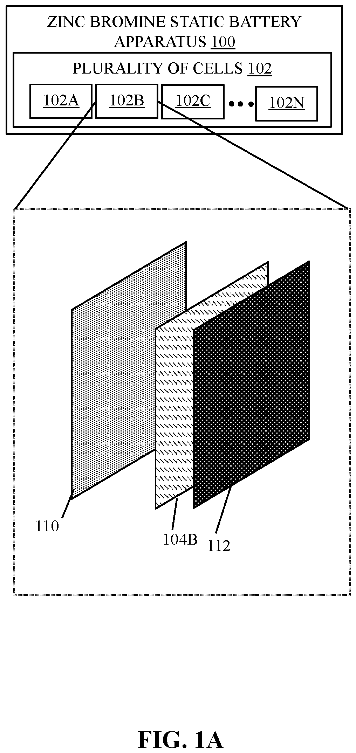

FIG. 1A is a diagram illustrating an exploded view of a cell of a zinc bromine static battery (ZBSB) apparatus, in accordance with an embodiment of the present disclosure. With reference to FIG. 1A, there is shown a ZBSB apparatus **100** includes a plurality of cells **102.** The plurality of cells **102** includes a first cell **102A,** a second cell **102B,** a third cell **102C,** and so on up to an Nth cell **102N.** In the illustrated embodiment of FIG. 1A, the second cell **102B** includes a second cathode layer **104B** and the third cell **102C** includes a third cathode layer **104C.** The second cathode layer **104B** is disposed between a bipolar current collector **110** and another bipolar current collector (i.e., a second bipolar current collector **112**)**.** The second cathode layer **104B** is in contact with a first electrically conductive layer of the second bipolar current collector **112.** In such configuration, a bipolar current collector is sandwiched between two consecutive cells. For example, the bipolar current collector **110** is sandwiched between the first cell **102A** and the second cell **102B,** and the second bipolar current collector **112** is sandwiched between the second cell **102B** and the third **cell 102C.**

It should be noted that, for illustration purposes, only the second cell **102B** is explicitly shown in FIG. 1A. However, each cell in the ZBSB apparatus **100** is structurally similar, sharing common features and functionalities. The omitted cells (e.g., **102A, 102C** to **102N**) adhere to the same design principles and components, differing only in their sequential arrangement within the battery stack.

The ZBSB apparatus **100** refers to a type of rechargeable battery that uses zinc and bromine as its active materials in which the static property comes from the fact that zinc-bromine static battery apparatus **100** may not require any pumps or moving parts to circulate the electrolyte, unlike a flow battery. Further, the ZBSB apparatus **100** involves a redox reaction between zinc and bromine ions. During discharge, zinc is oxidized at the anode, releasing electrons, while bromine is reduced at the cathode, accepting electrons. During charging, this process is reversed.

The plurality of cells **102** in the ZBSB apparatus **100** refers to the multiple individual electrochemical cells that are connected together to form the overall battery. The plurality of cells **102** are arranged in a stack within the ZBSB apparatus **100.**

Each cell of the plurality of cells **102** (for example, the first cell **102A,** the second cell **102B,** and so on up to the Nth cell **102N)** refers to an individual electrochemical unit within the ZBSB apparatus **100** where the conversion of chemical energy to electrical energy takes place (i.e. through redox reactions). Each cell consists of a cathode layer (for example, the second cathode layer **104B**) immersed in an electrolyte solution containing zinc and bromine compounds. Alternatively, each cell may or may not include a separator layer disposed between two consecutive bipolar current collectors.

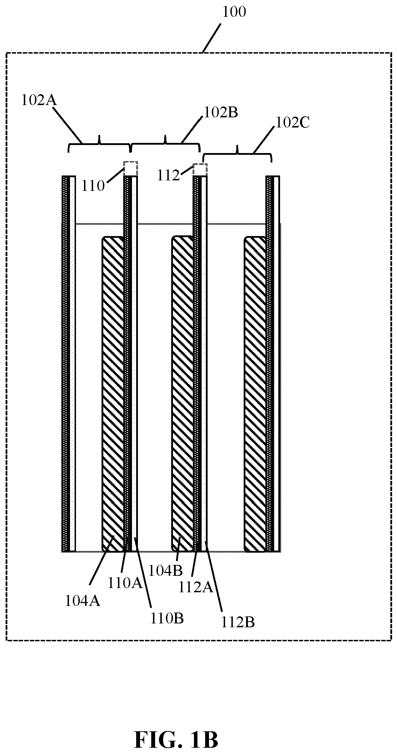

FIG. 1B is a diagram illustrating a cross-sectional view of the ZBSB apparatus, in accordance with an embodiment of the present disclosure. FIG. 1B is explained in conjunction with elements from FIG. 1A. With reference to FIG. 1B, there is shown the ZBSB apparatus **100** which includes the first cell **102A,** the second cell **102B** and the third cell **102C** of the plurality of cells **102** for illustration purposes. the first cell **102A** includes a first cathode layer **104A.** As discussed above, the second cell **102B** includes the second cathode layer **104B.** It should be noted that each of the plurality of cell **102** (as shown in FIG. 1A) is independent of a preinstalled anode layer. The ZBSB apparatus **100** further includes the bipolar current collector **110** sandwiched between the first cell **102A** and the second cell **102B.** Specifically, the bipolar current collector **110** is in contact with the first cathode layer **104A** of the first cell **102A** and the bipolar current collector **112** is in contact with the second cathode layer **104B** of the second cell **102B.** The bipolar current collectors **110** is composed of two layers, that is a first electrically conductive layer **110A** and a second electrically conductive layer **110B.** Similarly, the bipolar current collectors **112** is also composed of two layers, that is a first electrically conductive layer **112A** and a second electrically conductive layer **112B.** The first electrically conductive layer **110A** and the second electrically conductive layer **110B** of the bipolar current collector **110** are substantially similar to the first electrically conductive layer **112A** and the second electrically conductive layer **112B** of the bipolar current collector **112.**

The cathode layer (for example, the first cathode layer **104A** and the second cathode layer **104B**) refers to the electrode where reduction reactions occur during the discharge phase of the electrochemical cell. Specifically, in the case of the ZBSB apparatus **100,** the cathode layer is a component where bromine molecules are reduced. In case of the second cathode layer **104B,** during the charging process, the bromide ions from the electrolyte are oxidized and form the element bromine that is generated on the second cathode layer **104B.** During formation of the element bromine in the charging process, two electrons are released at the second cathode layer **104B,** where the two electrons travel through the external circuit and accepted by the zinc ions at the second electrically conductive layer **110B** which operates as an anode layer for the second cell **102B,** and where the zinc ions after accepting the two electrons gets plated at the second electrically conductive layer **110B** of the second cell **102B.** During the discharging process, the element bromine generated on the second cathode layer **104B** accepts two electrons (received from the second electrically conductive layer **110B** via the external circuit) and the element bromine is reduced that forms the bromide ions. The bromide ions are then dissolved in the electrolyte.

The anode in the ZBSB apparatus **100** refers to an electrode where oxidation takes place during the discharge phase of an electrochemical cell. Specifically, in the case of the ZBSB apparatus **100,** zinc (Zn) is used as an anode material, the anode layer is the region or component where metallic zinc undergo oxidation. However, in some implementations, the ZBSB apparatus **100** is independent of the preinstalled anode electrode. Thus, the second electrically conductive layer **110B** is configured to dynamically operate as an anode layer of the ZBSB apparatus **100** when in operation. In some implementations, during a charging process, zinc ions in the electrolyte flows to the second electrically conductive layer **110B** and are deposited at second electrically conductive layer **110B** in a solid state (i.e., Zn is plated at the second electrically conductive layer **110B**)**.** Further, two electrons are released from the second cathode layer **104B,** travel through the external circuit, and are accepted by the zinc ions at the second electrically conductive layer **110B.** The acceptance of the electrons by the zinc ions at the second electrically conductive layer **110B** is known as a zinc plating process. During a discharging process, zinc plated at the second electrically conductive layer **110B** releases two electrons that forms zinc ions. The zinc ions are then dissolves in the electrolyte. Simultaneously, the released electrons are accepted by element bromine of the second cathode layer **104B** to form mobile bromide ions which in turn also dissolves in the electrolyte.

As discussed above, alternatively, the ZBSB apparatus **100** may include the separator layer. The separator layer refers to a component that physically and electrically separates the anodic side and the cathodic side within a cell. The primary purpose of the separator layer is to prevent direct contact between the positive and negative electrodes while allowing the flow of ions between them. In an example, for the second cell **102B,** the separator layer separates the second electrically conductive layer **110B** and the second cathode layer **104B.** The separator layer has submicron-sized pores, and the pores work as channels where ions move between the second electrically conductive layer **110B** and the second cathode layer **104B.** Examples of the implementation of the separator layer may include, but are not limited to, an absorption glass Mat (AGM), a polyethylene (PE) or a sulfonated tetrafluoroethylene based fluoropolymer-copolymer.

The bipolar current collector (for example the bipolar current collector **110** and the bipolar current collector **112)** refers to a specialized structure used in certain types of batteries, including the ZBSB apparatus **100.** The bipolar current collector in the ZBSB apparatus **100** act as a conductive pathway for the flow of electrons between the electrochemical reactions (i.e. redox reactions) occurring in the cathode layers and acting anode layers (i.e., the second electrically conductive layer **110B** and the second electrically conductive layer **112B**) of the ZBSB apparatus **100** and an external circuit. The bipolar current collector facilitates the transfer of electrical charges generated during the chemical reactions within the ZBSB apparatus **100.**

The bipolar current collector consists of two distinct layers with different materials, each serving specific functions within the battery system. Each of the first electrically conductive layers **110A, 112A** refer to a type of polymer that contains a polyethylene based polymer, the electrically conductive agent and a plasticizer. The term "plasticizer" refers to a substance added to a polymer to increase its flexibility, workability, and ease of processing. Plasticizers are chemicals that are commonly used in the production of polymers to modify their physical properties. The plasticizers work by reducing the intermolecular forces between polymer chains, allowing for increased mobility and flexibility. In some implementations, the polyethylene based polymer includes high-density polyethylene (HDPE) having a density of 0.93- 0.97 gram per cubic centimetre. Some examples of the electrically conductive agents may include carbon nanotubes, electrically conductive carbon, and the like. In some implementations, the first electrically conductive layer **110A, 112A** comprises 60-90% by weight of HDPE, 10-30% by weight of the electrically conductive agent, and 1-5% by weight of the plasticizer. In some other implementations, the first electrically conductive layer **110A, 112A** comprises 70% by weight of HDPE, 29% by weight of the electrically conductive agent, and 1% by weight of the plasticizer.

Each of the second electrically conductive layer **110B, 112B** that is attached to the first electrically conductive layer **110A, 112A,** respectively. The second electrically conductive layer **110B, 112B** comprises the polyethylene based polymer and the graphite layer. Specifically, the second electrically conductive layer **110B, 112B** comprises 25-50% by weight of HDPE, 60-80% by weight of the graphite layer, and 1-5% by weight of the plasticizer. In some other implementations, the second electrically conductive layer **110B, 112B** comprises 30% by weight of HDPE, 69% by weight of the graphite layer, and 1% by weight of the plasticizer.

The strategic addition of graphite to the second electrically conductive layer **110B, 112B** in the bipolar current collector **110, 112** offers several technical advantages that significantly enhance the performance of the Zinc Bromine Static Battery (ZBSB) apparatus **100.** Foremost among these benefits is the prevention of dendrite formation. Graphite, with its smooth and stable surface structure, mitigates the growth of dendrites during charge and discharge cycles. Dendrites, microscopic protrusions that can form on electrode surfaces, pose a risk of short circuits and reduced battery efficiency. The presence of graphite in the second layer ensures a more uniform surface, minimizing the likelihood of dendrite formation and thereby enhancing the overall safety and reliability of the ZBSB apparatus **100.**

Moreover, graphite contributes to improved conductivity within the bipolar current collector **110, 112.** Its excellent electrical conductivity enhances electron flow, reducing electrical resistance during the battery's operation. This optimized conductivity ensures efficient charge and discharge cycles, promoting the longevity and reliability of the ZBSB apparatus **100.**

Additionally, the chemical inertness of graphite provides enhanced resistance to corrosive environments, a crucial aspect for the long-term durability of the ZBSB apparatus **100.** The graphite-faced layer in the bipolar current collector **110, 112** adds a layer of protection against chemical reactions, thereby extending the operational life of the ZBSB apparatus **100.**

In summary, the inclusion of graphite in the second electrically conductive layer **110B, 112B** not only prevents dendrite formation, ensuring safety and reliability but also improves conductivity and enhances chemical stability. These technical advantages collectively contribute to the overall efficiency, durability, and safety of the ZBSB apparatus **100.**

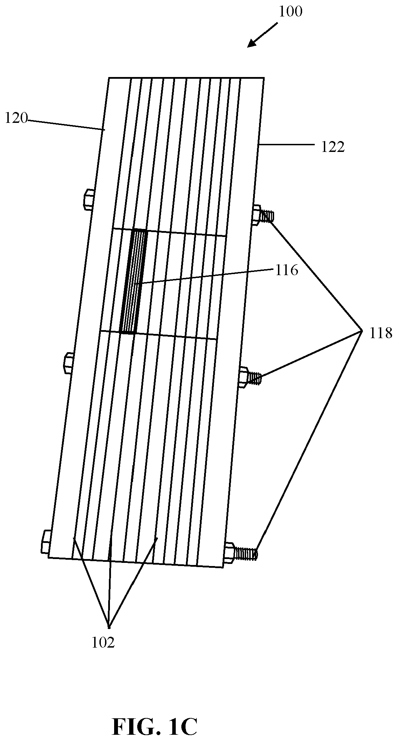

FIG. 1C is a diagram illustrating a top view of the ZBSB apparatus, in accordance with an embodiment of the present disclosure. FIG. 1C is explained in conjunction with elements from FIGs. 1A and 1B. With reference to FIG. 1C, there is shown a top view of ZBSB apparatus **100** depicting the plurality of cells **102,** an electrolyte filling slot **116,** additionally a plurality of fixing means **118** (e.g., screw-bolt based fixing means), a first base plate **120** and a second base plate **122.**

The electrolyte filling slot **116** facilitate the introduction of the electrolyte into the ZBSB apparatus **100.** The electrolyte filling slot **116** allows the easy pouring of gel-based electrolyte or liquid electrolyte into the ZBSB apparatus **100** via this designated slot, avoiding mixing of electrolytes among different cells thus avoiding short circuiting or any other discrepancy which could arise out of mixing of electrolytes of different cells of the ZBSB apparatus **100.** Hence increasing operational life of the ZBSB apparatus **100.** In an implementation, during the assembly of the ZBSB apparatus **100,** the first base plate **120,** the plurality of cells **102,** and the second base plate **122** are compressed together. In an implementation the plurality of fixing means **118** are inserted through peripheral portions of each of the first base plate **120,** and the second base plate **122.**

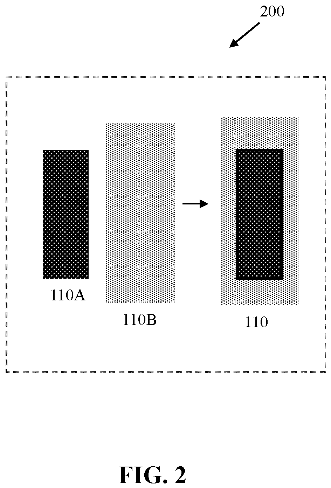

FIG. 2 is a diagram illustrating a process of preparation of a bipolar current collector for the ZBSB apparatus, in accordance with an embodiment of the present disclosure. FIG. 2 is explained in conjunction with elements from FIG. 1A, 1B, and 1C. With reference to FIG. 2, there is shown a schematic diagram **200** illustrating the process of preparation of the bipolar current collector **110** for the ZBSB apparatus **100.** The second electrically conductive layer **110B** is joined with the first electrically conductive layer **110A** at a temperature ranging from 100-150 degree Celsius to obtain the bipolar current collector **110.** During this thermal treatment, the polymers undergo a controlled bonding, creating a robust interface between the layers. The selected temperature range is crucial for ensuring proper adhesion and structural integrity of the bipolar current collector **110.** This thermal treatment facilitates the partial melting of the polymers, leading to controlled bonding and the creation of a strong interface within the bipolar current collector **110.** This robust structure ensures longevity under the demanding conditions of the ZBSB apparatus **100,** including the corrosive electrolyte and repeated charge/discharge cycles. Furthermore, the careful temperature control optimizes the adhesion properties of the composite, promoting efficient performance. This process also holds the potential to reduce costs compared to traditional metallic current collectors.

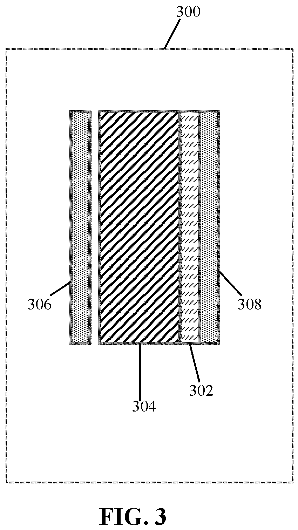

FIG. 3 is a diagram illustrating a cross sectional view of a cell of a ZBSB apparatus, in accordance with another embodiment of the present disclosure. FIG. 3 is explained in conjunction with elements from FIG. 1A, 1B, 1C, and 2. With reference to FIG. 3, there is shown a cell **300** that may be used in the ZBSB apparatus **100.** The cell **300** is substantially similar to each cell of the plurality of cells **102** (of FIG. 1A), in terms of functionality. The cell **300** includes a cathode layer **302,** and a separator layer **304** that separates an anodic side of the cell **300** from a cathodic side of the cell **300.** The cell **300** further includes a first anode side layer **306** of a bipolar current collector (only shown a side layer of the bipolar current collector in FIG. 3 for illustration purposes) and a first cathode side layer **308** of another bipolar current collector (only shown a side layer of the bipolar current collector in FIG. 3 for illustration purposes). The first anode side layer **306** is configured to operate as an anode layer of the cell **300** when in operation. Further, the first cathode side layer **308** is in contact with the cathode layer **302.** Both the first anode side layer **306** and the first cathode side layer **308** are made of the polyethylene based polymer (such as HDPE), the electrically conductive agent (such as conductive carbon, carbon nanotube, and the like), and the plasticizer.

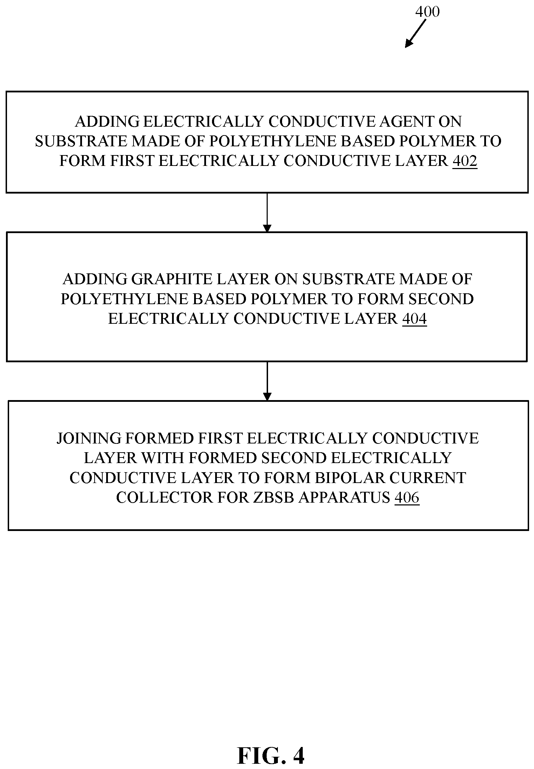

FIG. 4 is a flowchart of a method of preparation of a bipolar current collector for a Zinc Bromine Static Battery (ZBSB) apparatus, in accordance with an embodiment of the present disclosure. FIG. 4 is described in conjunction with elements from FIGs. 1A to 3. With reference to FIG. 4, there is shown a method **400** for preparation of the bipolar current collector **110** for the ZBSB apparatus **100.** The method **400** includes steps **402** to **406.**

At step **402,** the method **400** includes adding the electrically conductive agent on the substrate made of the polyethylene based polymer to form the first electrically conductive layer **110A.** In some implementations, the electrically conductive agent, such as carbon nanotubes or electrically conductive carbon, is added at 10-30% by weight and forms an interconnected network within the polyethylene matrix, creating pathways for electron transfer within the ZBSB apparatus **100.** The polyethylene based polymer may be high-density polyethylene (HDPE) with a density of 0.93-0.97 gram per cubic centimetre. The process typically involves combining HDPE with carbon nanotubes and a plasticizer (1-5% by weight) in a twin-screw extruder at 180-220 degrees Celsius, then pressing the compound into sheets of 0.3-0.5 mm thickness. The processing temperature must remain below 230 degree Celsius to prevent material degradation, while sufficient mixing time ensures homogeneous distribution of the conductive agent. The cooling rate is controlled to maintain dimensional stability of the first electrically conductive layer **110A.** The method **400** may also use carbon black at higher concentration, solution-based casting techniques, or compression moulding of pre-mixed powders, depending on the desired electrical and mechanical properties.

At step **404,** the method **400** further includes adding the graphite layer on the substrate made of the polyethylene based polymer to form the second electrically conductive layer **110B.** The graphite is added at 60-80% by weight to provide optimal surface characteristics for zinc plating and stripping, with its layered structure offering numerous active sites for zinc ion interaction while minimizing dendrite formation. The polyethylene based polymer provides structural support while allowing sufficient ionic access to the graphite particles. The process typically involves combining HDPE with graphite flakes (20-50 µm particle size) and a plasticizer, then processing the mixture into sheets with surface resistivity below 10 ohm/sq. The graphite concentration significantly affects the electrochemical performance, while the surface morphology influences zinc deposition patterns. The porosity of the resulting sheet facilitates electrolyte penetration while maintaining structural integrity of the second electrically conductive layer **110B.** The method may also utilize expanded graphite for increased surface area, incorporate multiple graphite types, or apply additional processing steps such as calendaring to fine-tune the surface properties.

At step **406,** the method **400** further includes joining the formed first electrically conductive layer **110A** with the formed second electrically conductive layer **110B** to form the bipolar current collector **110** for the ZBSB apparatus **100.** The joining process creates a unified bipolar current collector with distinct functional faces: one optimized for contact with the cathode layer and the other designed to function as a dynamic anode surface. The process utilizes the thermoplastic nature of polyethylene where heat and pressure cause polymer chain interdiffusion at the interface, creating a strong bond upon cooling without additional adhesives. As illustrated in FIG. 2, the joining step ensures structural integrity while maintaining the distinct functional properties of each layer. The process may be performed using various techniques such as hot rolling, compression in a hydraulic press, or ultrasonic welding, depending on the specific production requirements and desired interfacial characteristics of the bipolar current collector **110.**

In some implementations, the above mentioned joining includes disposing the formed first electrically conductive layer **110A** over the formed second electrically conductive layer **110B** and applying a hot rolling operation at a temperature ranging from 100-150 degree Celsius for the joining. Hot rolling operation is a metalworking process in which metal is heated above the recrystallization temperature to plastically deform it in the working or rolling operation. The process is used to create shapes with the desired geometrical dimensions and material properties while maintaining the same volume of metal. The hot metal is passed between two rolls to flatten it, lengthen it, reduce the cross-sectional area, and obtain a uniform thickness.

The steps **402** to **406** are only illustrative, and other alternatives can also be provided where one or more steps are added, one or more steps are removed, or one or more steps are provided in a different sequence without departing from the scope of the claims herein.

### EXPERIMENTAL RESULTS

The performance of the bipolar current collector **110** with the second electrically conductive layer **110B** configured to dynamically operate as an anode layer of the ZBSB apparatus **100** was evaluated through a series of experiments. The following experimental results demonstrate the improved performance characteristics of the novel bipolar current collector as compared to conventional current collectors.

### Test 1: Corrosion Resistance Testing

Corrosion resistance testing was conducted by immersing the bipolar current collector **110** and comparative conventional current collectors in a 3M ZnBr₂ electrolyte solution for 1000 hours at 25 degree Celsius. Weight measurements were taken at 0, 200, 500, and 1000 hours. The results are presented in Table 1 below:

**Table 1: Weight Loss Percentage After Exposure to 3M ZnBr₂ Electrolyte**

| Current Collector Material | Weight Loss After 200 Hours (%) | Weight Loss After 500 Hours (%) | Weight Loss After 1000 Hours (%) |
|---|---|---|---|
| Aluminium | 12.5 | 26.8 | Complete dissolution |
| Copper | 3.2 | 8.7 | 15.4 |
| Titanium | 0.05 | 0.08 | 0.12 |
| Bipolar Current Collector | 0.03 | 0.07 | 0.10 |

The data clearly demonstrates the superior corrosion resistance of the bipolar current collector **110** compared to aluminium and copper current collectors, and comparable resistance to the significantly more expensive titanium current collector.

### Test 2: Zinc Plating/Stripping Efficiency

Zinc plating/stripping efficiency was evaluated through galvanostatic cycling at a current density of 10 mA/cm² for 100 cycles. The coulombic efficiency was calculated as the ratio of discharge capacity to charge capacity for each cycle. The average values for 20th, 50th, and 100th cycles are presented in Table 2:

**Table 2: Zinc Plating/Stripping Coulombic Efficiency (%)**

| Current Collector Material | 20th Cycle (%) | 50th Cycle (%) | 100th Cycle (%) |
|---|---|---|---|
| Aluminium | 98.5 | 95.2 | 87.8 |
| Copper | 99.1 | 98.3 | 96.5 |
| Titanium | 96.2 | 93.1 | 90.8 |
| Bipolar Current Collector | 99.3 | 98.7 | 97.2 |

The bipolar current collector **110** demonstrated the highest coulombic efficiency at all test points, indicating superior zinc plating/stripping behaviour when the second electrically conductive layer **110B** dynamically operates as an anode layer.

### Test 3: Long-term Cycling Performance

The ZBSB apparatus **100** with the bipolar current collector **110** was subjected to long-term cycling tests at a 1C rate (i.e., the ZBSB apparatus **100** is charged/discharged over 1 hour) for 500 cycles. The capacity retention data is presented in Table 3:

**Table 3: Capacity Retention During Long-term Cycling**

| Current Collector Material | Capacity Retention After 100 Cycles (%) | Capacity Retention After 300 Cycles (%) | Capacity Retention After 500 Cycles (%) |
|---|---|---|---|
| Aluminium | 82.3 | Cell Failure | Cell Failure |
| Copper | 91.5 | 76.8 | Cell Failure |
| Titanium | 94.2 | 88.5 | 83.1 |
| Bipolar Current Collector | 96.8 | 91.2 | 86.5 |

The ZBSB apparatus **100** with the bipolar current collector **110** maintained 86.5% of its initial capacity after 500 cycles, demonstrating superior long-term stability compared to conventional metallic current collectors.

### Test 4: Electrode Surface Analysis

Scanning electron microscopy (SEM) was conducted on the second electrically conductive layer **110B** of the bipolar current collector **110** after 100 zinc plating/stripping cycles. The analysis revealed uniform zinc deposition with an average particle size of 2.5 µm and standard deviation of 0.6 µm. In contrast, zinc plated on copper current collectors showed an average particle size of 6.8 µm with a standard deviation of 3.2 µm, indicating more irregular deposition.

The measured depth of the zinc layer on the second electrically conductive layer **110B** was 25.2 µm ± 1.8 µm across the surface, whereas the zinc layer on the copper current collector varied from 15.3 µm to 42.7 µm, demonstrating the more uniform plating achieved with the bipolar current collector **110.**

### Test 5: Electrochemical Impedance Spectroscopy (EIS)

EIS measurements were conducted on cells with different current collectors after 1, 100, and 300 cycles. The charge transfer resistance (Rct) values are presented in Table 4:

**Table 4: Charge Transfer Resistance (Rct) During Cycling (ohm·cm²)**

| Current Collector Material | After 1 Cycle | After 100 Cycles | After 300 Cycles |
|---|---|---|---|
| Aluminium | 1.25 | 5.73 | Cell Failure |
| Copper | 0.98 | 2.84 | 6.37 |
| Titanium | 1.48 | 2.10 | 2.92 |
| Bipolar Current Collector | 0.87 | 1.35 | 1.92 |

The bipolar current collector **110** maintained the lowest charge transfer resistance throughout the cycling period, indicating superior electrical contact and reduced interfacial degradation.

### Test 6: Dendrite Formation Analysis

The dendrite formation was quantitatively evaluated by measuring the average length and density of dendrites after 200 cycles using 3D optical profilometry. The results are summarized in Table 6:

**Table 5: Zinc Dendrite Formation After 200 Cycles**

| Current Collector Material | Average Dendrite Length (µm) | Dendrite Density (number/cm²) |
|---|---|---|
| Aluminium | 75.3 | 1285 |
| Copper | 42.8 | 976 |
| Titanium | 23.5 | 358 |
| Bipolar Current Collector | 8.2 | 124 |

The bipolar current collector **110** with the graphite-containing second electrically conductive layer **110B** dynamically operating as an anode layer demonstrated significantly reduced dendrite formation, with average dendrite lengths of 8.2 µm compared to 42.8 µm for copper and 75.3 µm for aluminium.

The experimental results conclusively demonstrate that the bipolar current collector **110** with the second electrically conductive layer **110B** that operate as an anode layer provides superior performance characteristics in terms of corrosion resistance, zinc plating/stripping efficiency, long-term cycling stability, and dendrite suppression compared to conventional metallic current collectors used in the ZBSB apparatus **100.** The unique composition and structure of the bipolar current collector **110** addresses the key technical challenges in ZBSB technology, thereby enabling the development of more efficient and durable energy storage systems.

The following additional examples demonstrate the technical effects across various composition ranges for the bipolar current collector for Zinc Bromine Static Battery (ZBSB) apparatus.

EXAMPLE 1: Optimization of First Electrically Conductive Layer Composition First electrically conductive layers were prepared with varying HDPE and carbon nanotube compositions while maintaining 1% plasticizer content. The samples were evaluated for electrical conductivity, mechanical strength, and chemical stability.

**Table 1: Properties of First Electrically Conductive Layer with Varying Compositions**

| Sample | HDPE (wt%) | Carbon Nanotubes (wt%) | Electrical Conductivity (S/cm) | Tensile Strength (MPa) | Weight Loss After 500h in ZnBr₂ (%) |
|---|---|---|---|---|---|
| 1A | 50 | 49 | 87.4 | 12.3 | 0.42 |
| 1B | 60 | 39 | 65.2 | 18.7 | 0.15 |
| 1C | 70 | 29 | 42.8 | 24.6 | 0.09 |
| 1D | 80 | 19 | 23.5 | 31.2 | 0.07 |
| 1E | 90 | 9 | 8.3 | 38.5 | 0.06 |
| 1F | 95 | 4 | 2.1 | 42.1 | 0.05 |

Analysis: Sample 1A with 50% HDPE exhibited insufficient mechanical strength despite high conductivity. Samples within the claimed range of 60-90% HDPE (1B-1E) demonstrated optimal balance between electrical conductivity and mechanical/chemical stability. Sample 1F with 95% HDPE showed inadequate conductivity for effective current collection despite excellent mechanical properties. These results confirm that the claimed range of 60-90% HDPE and 10-30% conductive agent in the first electrically conductive layer provides an optimal balance of properties that cannot be achieved outside these ranges.

### EXAMPLE 2: Optimization of Second Electrically Conductive Layer Composition

Second electrically conductive layers were prepared with varying HDPE and graphite compositions while maintaining 1% plasticizer content. The layers were evaluated for zinc plating efficiency and dendrite formation.

**Table 2: Properties of Second Electrically Conductive Layer with Varying Compositions**

| Sample | HDPE (wt%) | Graphite (wt%) | Zinc Plating Efficiency (%) | Average Dendrite Length After 200 Cycles (µm) | Charge Transfer Resistance (Ω·cm²) |
|---|---|---|---|---|---|
| 2A | 15 | 84 | 92.3 | 12.8 | 2.87 |
| 2B | 25 | 74 | 97.8 | 7.5 | 1.93 |
| 2C | 30 | 69 | 99.2 | 6.8 | 1.85 |
| 2D | 40 | 59 | 98.5 | 8.2 | 1.92 |
| 2E | 50 | 49 | 96.3 | 9.5 | 2.15 |
| 2F | 60 | 39 | 91.2 | 15.3 | 3.42 |

**Analysis:** Sample 2A with 15% HDPE showed insufficient structural integrity. Samples within the claimed range of 25-50% HDPE and 60-80% graphite (2B-2E) demonstrated excellent zinc plating efficiency and minimal dendrite formation, with optimal performance observed in sample 2C (30% HDPE, 69% graphite). Sample 2F with 60% HDPE showed deteriorated electrochemical performance due to insufficient graphite content. These results confirm the criticality of the claimed composition ranges for the second electrically conductive layer to function effectively as a dynamic anode.

### EXAMPLE 3: Effect of Hot Rolling Temperature on Layer Bonding

Bipolar current collectors were prepared by joining optimized first and second electrically conductive layers using hot rolling at various temperatures. The interfacial adhesion strength and electrical resistance were measured.

**Table 3: Effect of Hot Rolling Temperature on Bipolar Current Collector Properties**

| Sample | Hot Rolling Temperature (°C) | Interfacial Adhesion Strength (N/cm) | Interfacial Electrical Resistance (mΩ·cm²) | Layer Delamination After 300 Cycles |
|---|---|---|---|---|
| 3A | 80 | 5.8 | 12.5 | Significant |
| 3B | 100 | 12.3 | 8.7 | Minimal |
| 3C | 120 | 18.7 | 3.2 | None |
| 3D | 150 | 23.8 | 2.9 | None |
| 3E | 170 | 22.2 | 5.3 | Medium |

Analysis: Sample 3A processed below the claimed temperature range showed insufficient interfacial adhesion. Samples processed within the range of 100-150 degree Celsius (3B-3D) demonstrated excellent interfacial properties. Sample 3E processed above the claimed range showed degradation of conductive components and increased interfacial resistance. These results confirm the criticality of the claimed hot rolling temperature range for achieving optimal interfacial properties in the bipolar current collector.

These above examples and tests demonstrate that the disclosed composition ranges and processing parameters provide unexpected technical effects and superior performance compared to values outside these ranges. The 60-90% polyethylene and 10-30% electrically conductive agent in the first layer provides an optimal balance of electrical conductivity, mechanical strength, and chemical stability. The 25-50% polyethylene and 60-80% graphite in the second layer enables superior zinc plating efficiency and minimal dendrite formation. The 100-150 degree Celsius hot rolling temperature range is beneficial for achieving optimal interfacial adhesion and electrical properties.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the present disclosure, which are, for brevity, described in the context of a single embodiment, may also be provided separately or in any suitable combination or as suitable in any other described embodiment of the disclosure.

## Claims

1. A bipolar current collector (110) of a Zinc Bromine Static Battery (ZBSB) apparatus (100), the bipolar current collector (110) comprising:
a first electrically conductive layer (110A) comprising a polyethylene based polymer and an electrically conductive agent, wherein the first electrically conductive layer (110A) is in contact with a cathode layer of the ZBSB apparatus (100); and
a second electrically conductive layer (110B) that is attached to the first electrically conductive layer (110A), wherein the second electrically conductive layer (110B) comprises the polyethylene based polymer and graphite, wherein the ZBSB apparatus (100) is independent of a preinstalled anode electrode, and wherein the second electrically conductive layer (110B) is configured to dynamically operate as an anode layer of the ZBSB apparatus (100) when in operation.

2. The bipolar current collector (110) of claim 1, wherein the polyethylene based polymer of the first electrically conductive layer (110A) comprises high-density polyethylene (HDPE) having a density of 0.93-0.97 gram per cubic centimeter.

3. The bipolar current collector (110) of claim 1, wherein the first electrically conductive layer (110A) comprises 60-90% by weight of the polyethylene based polymer, 10-30% by weight of the electrically conductive agent, and 1-5% by weight of a plasticizer.

4. The bipolar current collector (110) of claim 1, wherein the second electrically conductive layer (110B) comprises 25-50% by weight of the polyethylene based polymer, 60-80% by weight of graphite, and 1-5% by weight of a plasticizer.

5. The bipolar current collector (110) of claim 1, wherein the electrically conductive agent comprises at least one of carbon nanotubes and electrically conductive carbon.

6. A Zinc Bromine Static Battery (ZBSB) apparatus (100), comprising:
a first cell (102A) that comprises a first cathode layer (104A);
a second cell (102B) that comprises a second cathode layer (104B); and
a bipolar current collector (110) disposed between the first cell (102A) and the second cell (102B),
wherein the bipolar current collector (110) comprises:
a first electrically conductive layer (110A) comprising a polyethylene based polymer and an electrically conductive agent, wherein the first electrically conductive layer (110A) is in contact with the first cathode layer (104A) of the first cell (102A); and
a second electrically conductive layer (110B) that is attached to the first electrically conductive layer (110A), wherein the second electrically conductive layer (110B) comprises the polyethylene based polymer and graphite, wherein each of the first cell (102A) and the second cell (102B) of the ZBSB apparatus (100) is independent of a preinstalled anode electrode, and wherein the second electrically conductive layer (110B) is configured to dynamically operate as an anode layer of the second cell (102B) when in operation.

7. The ZBSB apparatus (100) of claim 6, further comprising a separator layer (304) disposed between the second electrically conductive layer (110B) and the second cathode layer (104B).

8. The ZBSB apparatus (100) of claim 6, further comprising an electrolyte filling slot (116) configured to facilitate introduction of an electrolyte into the ZBSB apparatus (100).

9. A method (400) of preparation of a bipolar current collector (110) for a Zinc Bromine Static Battery (ZBSB) apparatus (100), the method (400) comprising:
adding an electrically conductive agent on a substrate made of a polyethylene based polymer to form a first electrically conductive layer (110A);
adding a graphite layer on a substrate made of a polyethylene based polymer to form a second electrically conductive layer (110B); and
joining the formed first electrically conductive layer (110A)with the formed second electrically conductive layer (110B) to form the bipolar current collector (110) for the ZBSB apparatus (100).

10. The method (400) of claim 9, wherein the joining comprises disposing the formed first electrically conductive layer (110A) over the formed second electrically conductive layer (110B) and applying a hot rolling operation at a temperature ranging from 100-150 degree Celsius.
